(19) **Europäisches Patentamt / European Patent Office / Office européen des brevets**

(11) **EP 2 564 108 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **11723870.9**

(22) Anmeldetag: **02.05.2011**

(51) Int Cl.:
**B32B 3/02** (2006.01)   **B32B 3/12** (2006.01)
**B32B 3/26** (2006.01)   **F16L 59/065** (2006.01)
**E04B 1/80** (2006.01)

(86) Internationale Anmeldenummer:
**PCT/EP2011/002169**

(87) Internationale Veröffentlichungsnummer:
**WO 2011/134677 (03.11.2011 Gazette 2011/44)**

(54) **EVAKUIERTES FLÄCHENGEBILDE ZUR WÄRMEDÄMMUNG**

EVACUATED SHEET MATERIAL FOR THERMAL INSULATION

STRUCTURE PLANE SOUS VIDE POUR L'ISOLATION THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2010 DE 102010019074**

(43) Veröffentlichungstag der Anmeldung:
**06.03.2013 Patentblatt 2013/10**

(73) Patentinhaber: **va-Q-tec AG**
**97080 Würzburg (DE)**

(72) Erfinder:
• **HIEMEYER, Jochen**
**97834 Birkenfeld (DE)**
• **CAPS, Roland**
**63839 Kleinwallstadt (DE)**
• **ROTH, Stefan**
**97276 Margetshöchheim (DE)**

(74) Vertreter: **Küchler, Stefan**
**Patentanwalt**
**Färberstrasse 20**
**90402 Nürnberg (DE)**

(56) Entgegenhaltungen:
**EP-A2- 1 557 249     WO-A1-2007/033836**
**DE-A1- 10 058 566     US-A- 3 162 566**
**US-A- 5 500 305**

**Beschreibung**

Die Erfindung richtet sich auf ein evakuiertes Flächengebilde zur Wärmedämmung, umfassend wenigstens einen flächigen Kern aus einem offenporigen Material, eine erste, an einer ersten Hauptfläche des Kerns großflächig anliegende Barrierefolie mit wenigstens einer, dem Kern zugewandten Siegelschicht, eine zweite, den Kern an dessen anderer Hauptfläche umgebende Barrierefolie mit wenigstens einer Siegelschicht, eine rundum laufenden Siegelnaht, entlang der die beiden Barrierefolien aneinander gesiegelt sind, wobei das Volumen zwischen den beiden Barrierefolien und der rundum laufenden Siegelnaht evakuiert ist.

Evakuierte Dämmmaterialien erreichen Wärmeleitfähigkeiten, die um den Faktor fünf bis zwanzig geringer sind als von belüfteten, konventionellen Dämmstoffen. Es lassen sich zum Beispiel damit sehr kompakte, hochdämmende Transportbehälter für temperatursensitive Güter, hochdämmende Kühl- und Gefriergeräte oder extrem schlanke Dämmaufbauten im Gebäudebereich herstellen.

Für den Kern der evakuierten Dämmplatten eignen sich druckbelastbare Materialien in der Form von Pulverplatten, Pulverschüttungen, offenporigen Schäumen oder Glasfasermaterialien. Insbesondere Dämmkerne aus Pulverplatten oder losem Pulver werden gewöhnlich noch zur Minderung der Staubbildung mit einem luftdurchlässigen Polyestervlies umhüllt, wie sich bspw. aus der DE 100 585 66 ergibt. Damit wird verhindert, dass beim Evakuiervorgang in der Vakuumkammer Staub frei wird und sowohl die Siegelnähte als auch die Vakuumkammer verschmutzt.

Kernplatten aus mikroporösem Kieselsäurepulver weisen eine sehr feine Porenstruktur auf und lassen relativ hohe Gasdrücke zu, ohne dass die Wärmeleitfähigkeit des Restgases eine Rolle spielt. So ist bei diesen mikroporösen Materialien nur ein Vakuum von 1 bis 10 mbar notwendig, um die Wärmeleitfähigkeit auf 0,004 bis 0,005 W/mK zu bringen. Umhüllungen aus speziellen Hochbarrierefolien, die nur eine hauchdünne, aufgedampfte Beschichtung aus Aluminium aufweisen, stellen sicher, dass der Gasdruck im Kernmaterial nur mit etwa einem mbar pro Jahr ansteigt. Allerdings bedingen die bisherigen Herstellungsprozesse von Vakuumdämmplatten mit Pulverfüllung einen relativ hohen Aufwand und lassen sich nicht vollständig automatisieren. Ein Verfahren, das den Automatisierungsansprüchen relativ nahe kommt wird in DE 10 2005 045 726 mit den folgenden Verfahrensschritten beschrieben: Ein Pulver wird in einen Beutel aus Hochbarrierefolie eingefüllt, dessen Mantel Bereiche aufweist, welche die späteren Hauptflächen des fertigen Flächendämmkörpers bilden, während ein noch offener Bereich des Beutels später einen Teil des Umfangs des fertigen Flächendämmkörpers bilden soll; ein luftdurchlässiges, aber für Pulverstaub undurchlässiges Filtermaterial wird in der Nähe der Öffnung an der Innenseite des Folienbeutels derart befestigt, dass das Beutelinnere staubdicht abgeschlossen ist, jedoch noch Luft austreten kann; der Innenraum wird evakuiert; und schließlich wird der Beutel im evakuierten Zustand verschlossen, wobei das Filtermaterial schließlich außen vollständig von der zusammengefalteten Beutelöffnung abgedeckt wird und sich also vollständig im Beutelinneren bzw. vollständig innerhalb der Umhüllungsfolie des fertigen Wärmedämmkörpers befindet.

Die feinen Pulver können bei der Evakuierung im Beutel auch bei hohen Gasströmen durch das in der Beutelöffnung angebrachte Filtermaterial vollständig zurückgehalten werden, so dass der Evakuierraum und die Siegelnähte nicht verschmutzt werden. Der fertige Wärmedämmkörper weist dennoch eine optimale Dichtheit auf, da das Filtermaterial schließlich vollständig von der Umhüllungsfolie überdeckt wird. Allerdings hat das Verfahren den Nachteil, dass der Evakuiervorgang relativ lange dauert, da nur über die schmale, mit dem Filtervlies ausgestattet Öffnung mit relativ geringem Strömungsquerschnitt evakuiert werden kann. Außerdem wird durch das einseitige Absaugen eine eher ungleichmäßige Verteilung des Pulvers über der Paneelfläche erzeugt.

Im Stand der Technik ist ferner das US-Patent 5,500,305 bekannt, wo zwischen zwei schalenförmig vorgeformten Metallblechen ein Kernmaterial und darüber ein Filtermaterial platziert wird. Dieser Stand der Technik weist jedoch mehrere Nachteile auf: Zum Einen ist die Verwendung von steifen und vorzuformenden Metallblechen sehr aufwändig und daher für die Massenverwendung ungeeignet. Andererseits wird das Filtermaterial nur lose auf das kernmaterial gelegt, so dass während des Evakuierungsvorganges Partikel von dem Kernmaterial mitgerissen und an dem Filtermaterial vorbei zu der Vakuumpumpe gelangen und diese beschädigen können.

Andererseits offenbart die WO 2007/033836 A1 ein Verfahren zur Herstellung eines folienumhüllten, pulvergefüllten Vakuumdämmkörpers, wobei zunächst ein einseitig offener Folienbeutel hergestellt wird, der sodann mit dem pulverförmigen kernmaterial befüllt wird; sodann wird im Bereich der verbliebenen Öffnung ein Filtermaterial, beispielsweise ein Vlies, festegelegt, und der Folienbeutel sodann evakuiert und verschlossen. Bei dieser Methode erfolgt das Absaugen während des Evakuierens ausschließlich über eine stirnseitige Öffnung an dem Folienbeutel, also mit einem vergleichsweise geringen Querschnitt. Umgekeht muss die Luft vom Boden des Beutels einen lanngen Weg durch das möglicherweise bereits verdichtete Kernmaterial zurücklegen, so dass der Evakuierungsschritt insgesamt nur mit einer mäßigen Geschwindigkeit ablaufen kann. Andererseits bildet die Evakuierungsanlage bei der Herstellung von Vakuumdämmkörpern eine Art Flaschenhals, welcher die Produktionskapazität entscheidend bestimmt, und daher sollte der Verbleib eines Paneels innerhalb der Evakuierungsanlage so kurz als möglich sein.

Aus den Nachteilen des beschriebenen Standes der Technik resultiert das die Erfindung initiierende Problem, ein gattungsgemäßes, evakuiertes Flächengebilde zur Wärmedämmung derart weiterzubilden, dass eine bessere Evakuierung des Vakuumpaneels und eine beliebige Formgebung der Umrandung und der Flächenstrukturen möglich wird, und der Vakuumdämmkörper geknickt werden kann, ohne dass eine Beschädigung der Folien auftritt.

Die Lösung dieses Problems gelingt mit einem evakuierten Flächengebilde gemäß Hauptanspruch, insbesondere dadurch, dass an einer zweiten, der ersten Barrierefolie gegenüberliegenden Hauptfläche des Kerns ein flächiges Filtermaterial unter Einhaltung eines rundum laufenden Überstandes großflächig anliegt, wobei die zweite Barrierefolie an der Außenseite des flächigen Filtermaterials großflächig anliegt, und wobei das Filtermaterial rundum in die Siegelnaht zwischen den beiden Barrierefolien eingeschweißt ist.

Im Rahmen der vorliegenden Anmeldung soll der Begriff "Hauptfläche" als Gegenstück zum Begriff "Umfang", jeweils bezogen auf ein im Wesentlichen durch die Form des Kerns definiertes Flächengebilde, verstanden werden. Hierbei sind die beiden Hauptflächen üblicherweise eben sowie etwa parallel zueinander; in Einzelfällen könnte das Flächengebilde natürlich auch gewölbt sein, wobei dann beide Hauptflächen in ähnlicher Form gewölbt wären und in einem etwa gleichbleibenden Abstand zueinander verlaufen. Jedenfalls sind die beiden Hauptflächen durch eine rundum laufende Umfangsfläche voneinander getrennt. Die Breite dieser Umfangsfläche bzw. der Abstand zwischen den beiden Hauptflächen ist dabei jeweils kleiner als die kleinste Abmessung einer Hauptfläche. Die kleinste Abmessung einer Hauptfläche entspricht bei einer rechteckigen Hauptfläche - also insbesondere bei einem quaderförmigen Flächengebilde - deren Breite, bei einer quadratischen Hauptfläche deren Kantenlänge. Im Falle anders gearteter Hauptflächen mag man die kleinste Abmessung bspw. durch Einbeschreiben eines ggf. einer Hauptflächenwölbung angeschmiegten Quadrats mit maximaler Kantenlänge in die betreffende Hauptfläche ermitteln, und erhält dann mit der gefundenen Kantenlänge gleichzeitig den Wert für die kleinste Abmessung der Hauptfläche. Somit entspricht eine Hauptfläche insbesondere bei plattenförmigen Flächengebilden der Grundfläche der betreffenden Platte, und auch bei allen anders gearteten Flächengebilden sollte es auf diesem Wege möglich sein, die beiden Hauptflächen sowie den jene miteinander verbindenden Umfang zu ermitteln. Allgemein könnte man sagen, bei den Hauptflächen handelt es sich um die beiden größten Flächen eines Flächengebildes, welche den geringsten gegenseitigen Abstand aufweisen.

Indem das Filtermaterial nicht wie beim Stand der Technik nur an einer Stirn- bzw. Umfangsfläche des Kerns anliegt, sondern an einer gesamten Hauptfläche desselben, kann die Evakuierung des erfindungsgemäßen Wärmedämmkörpers über die gesamte Fläche des Filtervlieses erfolgen, so dass eine wesentlich gleichmäßigere Verteilung des Pulvers über die Fläche gewährleistet wird, aber auch gezielt Strukturen in der Oberfläche, z.B. Stufen mit definierten Dicken eingebracht werden können.

Zur Herstellung eines derartigen Wärmedämmkörpers kann das lose Pulver oder die Pulverplatte auf eine ersten Barrierefolie aufgebracht werden; darüber wird das Filtermaterial gelegt. Das Filtermaterial wird am Rand, der der späteren Flächenform des Vakuumdämmkörpers folgt, mit der ersten Barrierefolie verbunden, so dass für das Pulver ein abgeschlossenes Volumen entsteht, das aber trotzdem durchlässig für Luft ist und dank seiner großen Fläche ein erheblich schnelleres Evakuieren erlaubt als beim Stand der Technik. Allerdings ist erfindungsgemäß nicht vorgesehen, dass das Filtermaterial außen vollständig abgedeckt wird, sondern stattdessen wird dieses rundum laufend in die Siegelnaht eingesiegelt. Dadurch ergibt sich im Bereich dieser Siegelnaht eine dreilagige Struktur mit drei direkt aneinander liegenden Lagen: "Umhüllungsfolie" - "Filtermaterial" - "Umhüllungsfolie". Das Filtermaterial durchdringt die Siegelnaht als mittlerer Bestandteil dieser dreilagigen Struktur vom evakuierten Innenraum des evakuierten Flächengebildes bis zu dem umgebenden Außenraum, wo der atmosphärische Luftdruck herrscht, erstreckt sich also auch teilweise außerhalb des evakuierten Bereichs und bildet demnach an der Siegelnaht einen Teil der Umhüllung. Allerdings trägt dort zur Abdichtung nicht nur die dünne und daher luftdurchlässige Erstreckung lotrecht zu seiner Grundfläche bei, sondern das über die gesamte Breite der Siegelnaht eingesiegelte Filtermaterial, das sich dort überdies mit dem Material der Siegelschicht verbindet. Die Druckdifferenz zwischen atmosphärischem Luftdruck und Vakuum im Inneren wird also von der gesamten Breite der Siegelnaht übernommen. Andererseits hat sich wider Erwarten herausgestellt, dass diese Methode der Verankerung des Filtermaterials an der rundum laufenden Siegelnaht zu den geringsten Verwerfungen im Bereich der Siegelnaht führt und also insgesamt die zuverlässigste und dichteste Variante darstellt, obwohl das an und für sich luftdurchlässige Filtermaterial im Allgemeinen nicht geeignet ist, eine luftundurchlässige Umhüllung auszubilden. Mehr noch, das im Bereich der Siegelnaht zwischen den beiden Barrierefolien liegende Filtermaterial trennt die beiden Barrierefolie vollständig voneinander, so dass dieselben auch und gerade im Bereich der Siegelnaht nicht direkt aneinander grenzen, sondern stets voneinander getrennt sind. Durch diese solchermaßen verstärkte Zwischenschicht wird der Streß zwischen den beiden Barrierefolien erheblich reduziert, wodurch die Gefahr von Rissen in einer Metallisierungssschicht und daraus folgenden Undichtigkeiten weiter vermindert wird.

Es hat sich als günstig erwiesen, dass eine Barrierefolie eine größere Fläche aufweist als die andere. Während also die kleinere Barrierefolie eine Fläche $F_{B1}$ aufweist, ist die der anderen Barrierefolie $F_{B2} = F_{B1} + \Delta F$, mit $\Delta F \neq 0$. Bevorzugt gilt:

$$\Delta F \geq \Delta F_{min} = \frac{1}{2} * U * D * D/\ddot{U},$$

wobei U der Umfang des Kerns (oder der Gesamtumfang mehrerer Kerne) ist, D ist die Dicke des Kerns (oder jedes Kerns), und Ü ist die Breite des randseitigen Überstands der kleineren Folie über die Hauptfläche des Kerns (oder der Kerne). Mit dieser Formel läßt sich also aus der Geometrie des Kerns (oder der Kerne) und des Zuschnitts einer Folie der Minimal-Zuschnitt der anderen Folie bestimmen, der erforderlich ist, damit beim Verschweißen der beiden Folien um den Kern keine der Folien überdehnt werden muß, also das umschlossene Vakuum dauerhaft aufrechterhalten werden kann.

Indem das Filtermaterial eine größere Fläche aufweist als die kleinere Barrierefolie und/oder als die erste, großflächig an dem Kern anliegende Barrierefolie, ergibt sich eine maximale Filterfläche, wodurch ein optimales Evakuieren sichergestellt ist.

Bevorzugt weist das Filtermaterial die gleiche oder eine kleinere Fläche auf als diejenige Barrierefolie, mit der es sich in direktem, großflächigen Kontakt befindet. Durch diese Maßnahme ist eine glatte Außenfläche des fertigen Isolierpaneels gewährleistet, denn einerseits legt sich das Filtermaterial nicht in Falten, und andererseits steht es am Außenrand der Schweißlasche nicht merklich über.

Gemäß einem weiteren, erfindungsgemäßen Merkmal kann die zweite, großflächig an dem Filtermaterial anliegende Barrierefolie größer sein als die erste, großflächig an dem Kern anliegende Barrierefolie.

Weitere Vorteile ergeben sich dadurch, dass der Unterschied zwischen den Flächen der beiden Barrierefolien gleich oder größer ist als der Umfang des Kerns, multipliziert mit dessen 0,3-facher Stärke. Durch eine derartige Bemessung wird vermieden, dass eine der beiden Folien gedehnt werden muß, so dass die Gasdichtigkeit der Barrierefolien gewährleistet bleibt.

Bei einem Wärmedämmkörper mit mehreren Kernen hat es sich bewährt, dass der Unterschied zwischen den Flächen der beiden Barrierefolien gleich oder größer ist als die Summe aller Kernumfänge, multipliziert mit der etwa 0,3-fachen Kernstärke. Durch diese Maßnahme können mehrere Kerne zwischen zwei Barrierefolien eingeschweißt werden, ohne dass dazu eine der beiden Folien gedehnt oder gar beschädigt würde.

Infolge der erfindungsgemäßen Folienbemessung weist ein Querschnitt durch einen von der Barrierefolie umhüllten Kern etwa eine Hutform auf. Da solchenfalls eine rundum laufende Schweißlasche nach Art einer Hutkrempe in die Ebene einer Hauptfläche des Isolierpaneels verschoben ist, stößt sie im Idealfall nicht an der Stirnseite eines benachbarten Paneels an, sondern kann bspw. hinter eine Hauptfläche desselben geschoben werden. Somit ergibt sich der vorteilhafte Effekt, dass zwei derartige Paneele dicht an dicht verlegt werden können. Dies läßt sich bei der Belegung größerer Flächen dadurch nutzen, dass bei flächig aneinandergrenzenden Paneelen die Vorderseiten abwechselnd nach vorne bzw. nach hinten gerichtet sind. Die Platten können überdies auch in einem Flächenverbund verlegt werden, wenn deren Ecken abgeschnitten sind, vorzugsweise in Form dreieckiger Abschnitte.

Dazu ist es förderlich, wenn alle Abschnitte der rundum laufenden Siegelnaht in einer gemeinsamen Ebene liegen, insbesondere wenn die gemeinsame Ebene etwa mit dem Hauptabschnitt einer Barrierefolie fluchtet, und/oder wenn die gemeinsame Ebene etwa mit der dem Filtermaterial gegenüber liegenden Hauptfläche des Kerns fluchtet.

Erfindungsgemäß sind beide Barrierefolien flexibel, d.h., sie weisen keine eingeprägte Form auf, sondern passen sich der Form des Kerns an. Dadurch ist die Form des fertigen Isolierpaneels von der Form des Kerns abhängig; diese kann insbesondere durch Pressen definiert werden, entweder vor dem Einhüllen in eine Hochbarrierefolie und/oder Filtermaterial, zu einer bspw. plattenförmigen Gestalt, oder nach dem Einhüllen in eine Hochbarrierefolie und/oder Filtermaterial gemeinsam mit jener, in eine nahezu beliebige Form.

Die Erfindung läßt sich dahingehend weiterbilden, dass eine oder beide Barrierefolien eine oder mehrere metallisierte Schichten aufweisen. Bspw. sollte diejenige Barrierefolie, deren Hauptabschnitt an das Filtermaterial angrenzt, und/oder deren Hauptabschnitt nicht mit der gemeinsamen Ebene aller Abschnitte der rundum laufenden Siegelnaht fluchtet, aus einer metallisierten oder transparenten Hochbarrierefolie bestehen. Eine solche Folie ist sehr biegsam, ohne dass dabei die hauchdünne, für die Aufrechterhaltung des Vakuums im Inneren wichtige Metallschicht beschädigt würde, und also für die zu der "Hutkrempe" herab zu biegende Barrierefolie besonders geeignet.

Andererseits kann wenigstens eine Barrierefolie aus einer Aluminiumverbundfolie bestehen, insbesondere diejenige Barrierefolie, deren Hauptabschnitt nicht an das Filtermaterial angrenzt, und/oder deren Hauptabschnitt etwa mit der gemeinsamen Ebene aller Abschnitte der rundum laufenden Siegelnaht fluchtet. Eine Aluminium- bzw. Aluminiumverbundfolie ist - trotz einer grundsätzlich vorhandenen Flexibilität - steifer als andere Folienmaterialien und daher insbesondere für diejenige Folienlage geeignet, welche ohnehin in oder nahe der umlaufenden Schweißlasche liegt, da sie solchenfalls nicht gebogen oder umgefaltet werden muß.

Wenn eine oder vorzugsweise beide Barrierefolien eine Gasdurchlässigkeit von weniger als 1 $cm^3/(m^2 d)$ und/oder eine Wasserdampfdurchlässigkeit von weniger als 1 $g/(m^2 d)$ aufweisen, erhält man ein inneres Vakuum von sehr langer Dauer. Dabei sind die Volumenangaben auf 1 bar Druck und Raumtemperatur bezogen, und d entspricht der Einheit "Tag".

Die Erfindung sieht weiterhin vor, dass die Barrierefolien jeweils nur eine einzige Siegelschicht aufweisen. Da diese im Bereich der Schweißlasche jeweils mit ihren dem Kern zugewandten Flächen aneinanderliegen, ist eine Beschichtung der Außenseite mit einer Siegelschicht nicht erforderlich.

Bevorzugt ist die rundumlaufende Siegelnaht in einem einzigen Arbeitsgang hergestellt. Durch Zusammenfassung dieser Siegelungen in einem einzigen Arbeitsgang kann das Herstellungsverfahren weiter vereinfacht werden.

Es hat sich bewährt, dass die rundumlaufende Siegelnaht weder einen erkennbaren Anfang noch ein erkennbares Ende aufweist, und/oder dass die rundumlaufende Siegelnaht keine Überkreuzungen aufweist. Diese Merkmale ergeben sich infolge der Herstellung in nur einem einzigen Arbeitsgang.

Weitere Vorzüge ergeben sich dadurch, dass das Filtermaterial aus einem Werkstoff besteht, welcher sich mit der Siegelschicht einer oder vorzugsweise beider Barrierefolien verschmelzen läßt, insbesondere aus dem selben Werkstoff wie die Siegelschicht einer oder beider Barrierefolie(n). Das Filtermaterial kann z.B. aus einem Polyestervlies bestehen, welches mit der Polyethylensiegelschicht des Folienbeutel unter dem Einfluss von Wärme verklebbar ist.

Die Erfindung eignet sich besonders für die Ausbildung einer oder mehrerer Durchdringung(en) bzw. Ausschnitte und/oder Einschnitte in wenigstens einer Barrierefolie. Denn sofern entlang eines solchen Aus- oder Einschnitts eine Siegelnaht verläuft und den verbleibenden Kern gegenüber einem solchen Aus- oder Einschnitt vakuumdicht abschließt, lassen sich gemäß der Erfindung entsprechend aus- oder eingeschnittene Kerne verwenden oder herstellen.

Die Erfindung zeichnet sich bevorzugt aus durch eine oder mehrere Durchdringung(en) bzw. Ausschnitte und/oder Einschnitte in jeweils beiden Barrierefolien, welche etwa miteinander fluchten oder einander überdecken. Im Fall einer vakuumdichten Siegelung entlang des Randes eines derartigen Aus- oder Einschnitts können beide Barrierefolien an dieser Stelle unterbrochen werden, und es ergibt sich bspw. eine Durchsecköffnung od. dgl.

Zur Abdichtung sollten allerdings entlang einer oder mehrerer Durchdringung(en) bzw. Ausschnitte und/oder Einschnitte eine oder mehrere Siegelnähte verlaufen, welche jeweils beide Barrierefolien miteinander verbinden.

Im Rahmen der Erfindung können mehrere Durchdringungen bzw. Ausschnitte und/oder Einschnitte etwa gleiche Flächen aufweisen, so dass sich ggf. genormte Geometrien ergeben, welche für eine Weiterverarbeitung förderlich sind. Insbesondere können in einem solchen Fall mehrere Durchdringungen bzw. Ausschnitte und/oder Einschnitte in einem regelmäßigen Raster liegen.

Sofern - wie die Erfindung weiterhin vorsieht - mehrere Durchdringungen bzw. Ausschnitte und/oder Einschnitte in einem schachbrettartigen Raster liegen, entsprechend gleichfarbiger Felder eines Schachbretts, so lassen sich zwei derartige, schachbrettförmige Wärmedämmelemente mit antiparalleler Ausrichtung ihrer Oberseiten ineinander anordnen entsprechend der weißen und schwarzen Felder eines Schachbretts, und dadurch zu einer nahezu lückenlosen Gesamtanordnung ineinanderfügen, ohne dass jedoch dadurch bei einem einzigen Leck - bspw. infolge einer punktuellen Verletzung einer Hochbarrierefolie - sogleich das Vakuum in der gesamten Fläche verlorenginge.

Insbesondere bietet die Erfindung die Möglichkeit, dass zwischen den beiden Barrierefolien innerhalb einer gemeinsamen Ebene mehrere Kerne vorhanden sind, welche voneinander vollständig getrennt sind. Dadurch wird auch die Flexibilität der Gesamtanordnung gesteigert, weil voneinander getrennte Kerne nur durch die ohnehin vergleichsweise biegsamen Folien miteinander verbunden sind und also gegeneinander gebogen werden können.

Diesen Gedanken weiter verfolgend, können ferner mehrere Kerne vorgesehen sein, welche etwa gleiche Grundflächen aufweisen. Diese Maßnahme erleichtert die Herstellung weiter, weil dadurch nur gleichförmige Teile erforderlich sind, die in einem für die Massenherstellung geeigneten Arbeitsprozess angefertigt werden können.

Besonders bevorzugt die Erfindung eine Anordnung mit mehreren Kernen, welche in einem regelmäßigen Raster liegen, vorzugsweise in einem schachbrettartigen Raster, entsprechend gleichfarbiger Felder eines Schachbretts. Dadurch wird eine Anordnung mit Ausschnitten in den Barrierefolien und dem Filtermaterial ermöglicht, nämlich jeweils an den Plätzen fehlender Kerne, wobei die Isolierelemente vollständig durchsetzende Durchbrechungen geschaffen werden, bspw. als Durchsecköffnungen od. dgl.

Die Erfindung zeichnet sich weiterhin aus durch eine Mehrzahl von Kernen einerseits, welche in einem schachbrettartigen Raster liegen, entsprechend gleichfarbiger Felder eines Schachbretts, sowie durch mehrere Durchbrechungen bzw. Ausschnitte und/oder Einschnitte andererseits, welche ebenfalls in einem schachbrettartigen Raster liegen, jedoch entsprechend der jeweils andersfarbigen Felder eines Schachbretts, wobei die Kerne und Durchbrechungen bzw. Ausschnitte und/oder Einschnitte jeweils etwa gleiche Flächen und/oder gleiche Querschnitte aufweisen. Eine derartige Ausführungsform bietet die Möglichkeit, zwei derartige, mattenförmige Flächengebilde mit antiparallel zueinander ausgerichteten Oberseiten ineinander anzuordnen, so dass jeweils ein Kern einer Matte in eine Durchbrechung bzw. Vertiefung der anderen Matte eingreift und sich auf diese Weg eine Verschachtelung ergibt, wobei die Gesamtanordnung keine oder kaum Lücken aufweist. Wenn die jeweils rückwärtige Aluminiumverbundfolie im Bereich der Kerndurchbrechungen nicht ausgeschnitten ist, ergibt sich zusätzlich an beiden Seiten eine durchgehende Lage aus Alminiumverbundfolie, während die inneren Lagen aus einer Hochbarrierefolie mit aufgedampfter Metallisierung bestehen und also keine Wärmebrücken ausbilden.

Die Erfindung empfiehlt, dass ein oder mehrere Kerne im wesentlichen aus pyrogener Kieselsäure, Fällungskieselsäure, Perlitpulver, Microsilica, Silica aus der Verwertung von pflanzlichen Abfällen, mineralischen Pulvern oder organischen Pulvermaterialien oder deren Mischungen besteht (-en). Als Pulverfüllung eignen sich bspw. mikroporöse Kieselsäurepulver, Perlitpulver, Pulver aus zermahlenen offenporigen organischen Schäumen oder schüttbare Glasfasermaterialien mit kurzen Faserlängen sowie Platten aus gepressten Pulvern. Im allgemeinen ist diesen Pulvern noch ein Trübungsmittel zur Verringerung des Wärmestrahlungsdurchgangs zugemischt.

Die Erfindung eignet sich für Wärmedämmkörper, wobei ein oder mehrere Kerne aus gepresstem Pulver besteht (-en). Solche, bspw. plattenförmigen Kerne können problemlos verarbeitet werden.

Andererseits können auch ein oder mehrere Kerne aus losem Pulver besteht (-en), da sich aufgrund des Filtermaterials selbst aus einem losen Pulver während des Evakuierens keine Partikel lösen können.

Weiterhin zeichnet sich die Erfindung aus durch eingeprägte Strukturen auf einer oder beiden Oberflächen, welche unterschiedlichen Zwecken dienen können: Anpassung an unterschiedliche Dickenanforderungen, Erhöhung der Biegefähigkeit in bestimmten Bereichen, Schaffung von Aufnahmeräumen für beim Evakuieren entstehende Falten der Hochbarrierefolien, etc.

Verfügt ein Isolierpaneel bspw. über eine oder mehrere eingeprägte Stufe(n), wobei die daran angrenzenden Flächenbereiche unterschiedlich dick sind, so können derartige Paneele einander überlappend aneinander gesetzt werden, wenn die dünneren Flächenbereiche entlang eines oder mehrerer Ränder der Paneele verlaufen. Eine bevorzugte Dimensionierung ist dabei eine Verjüngung auf etwa 50 % der maximalen Paneeldicke, so dass die Summe zweier überlappend aufeinander gelegter Paneele wieder die ursprüngliche Paneelstärke ergibt.

Weitere Vorteile bietet (-en) eine oder mehrere linienförmige oder streifenförmige Einprägungen, so dass das evakuierte Flächengebilde an diesen Einprägungen um mindestens 5° knickbar ist. Dadurch läßt sich ein derartiges Isolationspaneel auch an gewölbte Flächen anpassen, bspw. an Fässer od. dgl. Eine solche Wölbung läßt sich bereits beim Evakuieren herbeiführen, so dass ein derartiger Isolationkörper ständig eine gewölbte Form einnimmt, oder er ist aufgrund der Einprägungen jedenfalls sehr flexibel und kann bei Bedarf leicht gebogen werden.

Außerdem besteht die Möglichkeit, dass die beiden Barrierefolien entlang einer oder mehrerer linienförmiger oder streifenförmiger Einprägung(en) miteinander versiegelt sind, insbesondere ohne Einschluss von Pulverteilchen. In diesem Fall ergibt sich ein Höchstmaß an Flexibilität, so dass damit bei Bedarf auch kleine Wölbungsradien herstellbar sind.

Wenn solche Einprägungen das Flächengebilde von einem randseitigen Siegelnahtabschnitt bis zu einem anderen vollständig durchqueren, lassen sich damit einzelne Bereiche des Flächengebildes vakuumdicht gegeneinander abschließen. Dies führt zu dem erstrebenswerten Nebeneffekt, dass die Druckverhältnisse in unterschiedlichen Flächenbereichen unabhängig voneinander sind, so dass bei einer - versehentlichen - Belüftung eines abgeschlossenen Teilbereichs zumindest die übrigen Bereiche weiterhin vakuumdicht bleiben.

Die Erfindung eignet sich besonders für eine nicht-rechtwinklige Flächenformgebung, bspw. im Rahmen einer Schuhsohle oder sonstiger Isolationsmatten, bspw. für Kleidungsstücke wie Westen, aber auch die vielfältigsten anderen Anwendungen.

Ferner kann vorgesehen sein, dass das flächige Filtermaterial aus Polyestervlies oder -gewebe, Polyethylenvlies oder -gewebe, Polyolefinvlies oder -gewebe, Glasfaservlies oder -gewebe oder aus Papier besteht. Wichtig ist vor allem seine Rückhaltefähigkeit für Partikel bei gleichzeitiger Gasdurchlässigkeit.

Zur Messung des (Unter-) Drucks in dem evakuierten Flächengebilde von außen kann wenigstens ein zwischen den Barrierefolien angeordneter, insbesondere in einer Vertiefung des Kerns eingelegter Probekörper oder Sensor verwendet werden. Dieser kann auf unterschiedlichen Wirkprinzipien aufgebaut sein, bspw. als von außen, bspw. drahtlos, auslesbarer Drucksensor oder als Wärmesenke, insbesondere hinter einem porösen Körper, so dass durch Aufprägung eines Temperatursprungs von außen die zu der Wärmesenke hin abfließende und daher von außen nachzuliefernde Energiemenge erfaßt wird und/oder deren zeitlicher Verlauf, woraus sich dann Rückschlüsse über den Druck im Inneren ziehen lassen.

Besonders bewährt hat sich hierbei, den Probekörper oder Sensor zwischen dem Kern und dem Filtermaterial anzuordnen und eventuell von dem Filtermaterial abzudecken. Dadurch kann das von dem Vakuum durchsetzte Filtermaterial auf dessen Eigenschaften geprüft werden, insbesondere auf dessen thermische Leitfähigkeit, woraus dann wiederum auf die Druckverhältnisse innerhalb des Isolationspaneels geschlossen werden kann.

Im Rahmen einer bevorzugten Ausbildung dieses Erfindungsgedankens kann weiterhin vorgesehen sein, dass eine Ausbuchtung in der Folienfläche nur die beiden Barrierefolien sowie das Filtermaterial aufweist, so dass an dieser Stelle über den von außen gemessenen Wärmedurchgang durch das Filtermaterial der Gasdruck im Kern bestimmt werden kann. Zu diesem Zweck muß allerdings darauf geachtet werden, dass die betreffende Ausbuchtung mit dem Kernvolumen kommuniziert und also dem selben Druck unterliegt wie das eigentliche Kernvolumen.

Ein Verfahren zur Herstellung eines evakuierten Wärmedämmkörpers beliebiger Form zeichnet sich dadurch aus, dass

- auf eine erste Barrierefolie loses Pulver oder ein verfestigter Pulverkern aufgebracht wird, derart, dass die erste Barrierefolie einen rundum laufenden Überstand gegenüber einer ersten, angrenzenden Hauptfläche des Kerns oder Kernmaterials aufweist;
- darüber ein flächiges Filtermaterial zu liegen kommt, derart, dass dieses einen rundum laufenden Überstand gegenüber einer zweiten, an das Filtermaterial angrenzenden Hauptfläche des Kerns oder Kernmaterials aufweist;
- das flächige Filtermaterial im Bereich seines Überstandes mit dem Überstand der ersten Barrierefolie so verbunden wird, dass das Kern- oder Pulvervolumen abgeschlossen ist,
- der Kern oder dessen Kernmaterial in einer Vakuumkammer auf einen Druck von < 10 mbar evakuiert wird,
- eine zweite Barrierefolie außen auf das Filtermaterial appliziert wird, derart, dass diese über die zweite Hauptfläche des Kerns oder Kernmaterials einen rundum laufenden Überstand aufweist, der mit dem Überstand des Filtermaterials und/oder mit dem Überstand der ersten Barrierefolie im Vakuum so verbunden wird, dass das innere Volumen bestehend aus Pulverkern und Filterflächenmaterial vakuumdicht abgeschlossen ist,
- und das Flächengebilde der Vakuumkammer nach dem Belüften entnommen wird.

Spätestens nach dem pulverdichten Befestigen, insbesondere Aufkleben des Filtermaterials kann das Pulver in die gewünschte Form gebracht werden, vorzugsweise durch Rütteln und/oder Pressen. Der Pressdruck soll dabei möglichst nur maximal 1 bar betragen, damit eine möglichst geringe Dichte verbunden mit einer geringen Wärmeleitfähigkeit erreicht wird. Die Formgebung kann auch noch durch eine Presseinrichtung nach dem Evakuieren und Versiegeln in der Vakuumkammer erfolgen.

In einem anderen Arbeitsgang wird auf das Filtermaterial noch eine zweite Barrierefolie auf- oder angelegt. Diese zweite Barrierefolie kann zur Fixierung stellenweise mit der ersten Barrierefolie verbunden werden. Die Anordnung wird in der Vakuumkammer auf einen Druck von unter 10 mbar evakuiert. Das Absaugen der Luft erfolgt über der gesamten Fläche. Anschließend wird in der Vakuumkammer die zweite Barrierefolie mit der ersten Barrierefolie so verbunden, dass das innere Volumen, bestehend aus Pulvervolumen und Filtermaterial vakuumdicht abgeschlossen wird. Die Verbindung kann mit einer Siegelanordnung erfolgen, die der Flächenkontur des Vakuumdämmkörpers angepaßt ist bzw. folgt.

Vor dem Belüften der Vakuumkammer kann der versiegelte, pulvergefüllte Folienbeutel noch in die gewünschte Form gebracht werden. Nach dem Formen in der Vakuumkammer wird diese belüftet, wodurch das Vakuumpaneel durch den Differenzdruck zwischen innerem Vakuum und äußerem, atmosphärischem Druck zusammengepresst und dadurch zusätzlich stabilisiert wird und der Kammer entnommen werden kann. Daraufhin könnte sich ein weiterer Preßvorgang anschließen; dies ist jedoch weniger zu empfehlen, da der Kern im evakuierten Zustand nur noch schwerlich formbar ist.

In das Vakuumpaneel können während des Pressvorgangs - vorzugsweise vor dem Belüften der Vakuumkammer - auch Strukturen aufgeprägt werden. Es ist auch möglich, durch eingelegte Pressformen Stufen mit unterschiedlichen Dicken oder einen Stufenfalz am Rand einzuprägen. Eine weitere Variante kann darin bestehen, Durchdringungen in der Fläche einzubringen, an deren Rändern die beiden Barrierefolien versiegelt werden. Im Kern kann das entsprechende Loch vorgestanzt sein.

Vorzugsweise liegt die zweite Barrierefolie während des Evakuierens lose auf dem vom Filterflächengebilde abgedeckten Pulverkern auf oder an und wird anschließend mit der ersten Barrierefolie verbunden.

Es hat sich bewährt, die zweite Barrierefolie in der Vakuumkammer vor, während oder nach dem Evakuiervorgang auf den vom Filterflächengebilde abgedeckten Dämmkern aufzulegen und anschließend mit der ersten Barrierefolie zu verbinden.

Die Erfindung sieht weiterhin vor, dass die Verbindung von erster und zweiter Barrierefolie durch thermisches Versiegeln ihrer Siegelschichten, insbesondere ihrer Polyethylenschichten, erfolgt. Wenn das Filtermaterial aus einem mit diesen Siegel- bzw. Polyethylenschichten verschmelzbaren Material besteht, kann es ohne weiteres in die Siegelnaht zwischen den beiden Barrierefolien hineinragen und darin mit eingeschmolzen sein, ohne dass dadurch die Gasdichtheit der Hülle leidet.

Schließlich entspricht es der Lehre der Erfindung, dass das thermische Versiegeln mit einer umlaufenden Siegelvorrichtung durchgeführt wird, die der Formgebung des evakuierten Dämmkörpers folgt. Es handelt sich hierbei um eine bevorzugte, allerdings nicht um die einzig mögliche Variante.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    eine schematische Schnittdarstellung der Lagen eines erfindungsgemäßen Wärmedämmkörpers in einer Art Sprengdarstellung vor dessen Montage;

Fig. 2    eine der Fig. 2 entsprechende Ansicht auf einen fertiggestellten Wärmedämmkörper;

Fig. 3    eine Draufsicht auf die Fig. 2;

Fig. 4    eine der Fig. 3 entsprechende Darstellung einer abgewandelten Ausführungsform der Erfindung;

Fig. 5    einen Schnitt durch die Fig. 4 entlang der Linie V - V, wobei die Zusammensetzung mit anderen, gleichartigen Wärmedämmkörpern angedeutet ist;

Fig. 6    eine wiederum abgewandelte, mattenförmige Ausführungsform der Erfindung in einer der Fig. 4 entsprechenden Darstellung;

Fig. 7    einen Schnitt durch die Fig. 6 entlang der Linie VII - VII; sowie

Fig. 8    einen Schnitt durch die Fig. 6 entlang der Linie VIII - VIII, zusammen mit einer zweiten, baugleichen Wärmedämmmatte, die gestürzt ist, so das ihre Oberseiten nach unten weisen, so dass diese in die Vertiefungen der unteren Matte eingreifen können.

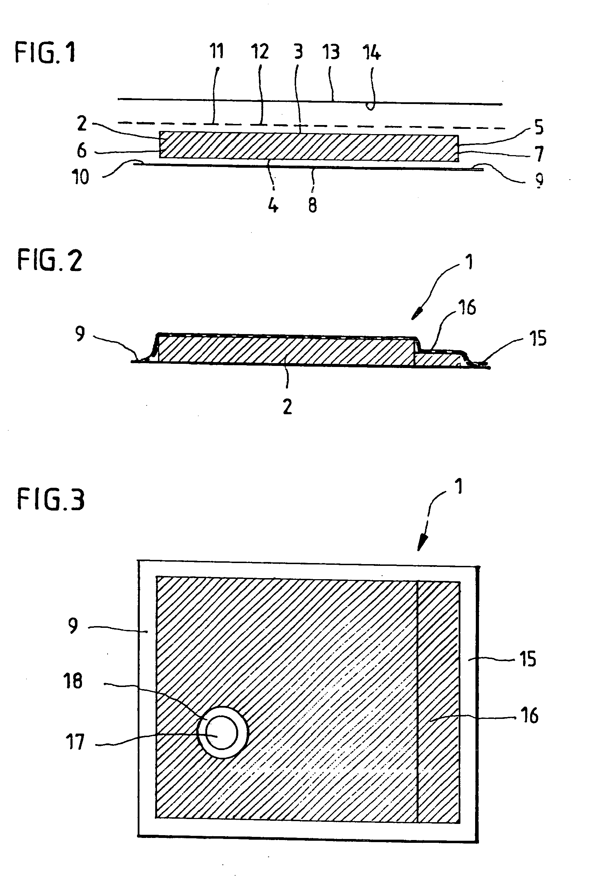

Die Grundstruktur der erfindungsgemäßen Anordnung ergibt sich aus der Fig. 1:

Die Gestalt des fertigen Wärmedämmkörpers 1 wird bestimmt durch die Gestalt seines Kerns 2. Dieser besteht aus einem porösen Material, bspw. aus pyrogener Kieselsäure, Fällungskieselsäure, Perlitpulver, Microsilica, Silica aus der Verwertung pflanzlicher Abfälle, mineralischen Pulvern oder organischen Pulvermaterialien oder deren Mischungen. Der Kern 2 ist aus einem solchen Pulver geformt, insbesondere durch Pressen. Er kann dabei entweder entsprechend vorgeformt sein, bspw. zu einer Platte gepreßt und/oder ausgeschnitten oder ausgestanzt, oder er erhält erst während dem erfindungsgemäßen Herstellungsverfahren aus dem zunächst losen Pulver seine endgültige Gestalt. Dennoch soll er für die folgende Erläuterung der Grundstruktur als gegeben angesehen werden. Im Übrigen muß der Kern 2 weder quader- noch plattenförmig sein, sondern kann eine weitgehend beliebige Form aufweisen, bspw. gewölbt, oder er könnte unterschiedliche Dicken in verschiedenen Bereichen aufweisen, sogar Aus- oder Einschnitte und Druchbrechungen sind möglich; auch in seiner Oberfläche könnten Strukturen eingeprägt sein, bspw. Rillen od. dgl.

Im folgenden soll der Einfachheit davon ausgegangen werden, dass der Kern 2 eine flache Gestalt aufweist mit einer rechteckigen Grundfläche.

Der Kern 2 wird berandet durch zwei einander gegenüberliegende, vorzugsweise zueinander parallele Hauptflächen 3, 4 sowie eine zwischen diesen Hauptflächen 3, 4 verlaufende Umfangsfläche 5, bspw. bestehend aus vier Stirnseiten. Bei der vereinfachten Darstellung aus Fig. 1 sind die beiden Hauptflächen 3, 4 deckungsgleich, und je zwei einander gegenüber liegende Stirnseiten 6, 7 sind ebenfalls parallel zueinander, gleich groß und verlaufen jeweils lotrecht zu den Hauptflächen 3, 4. Damit hat der Kern 2 eine konstante Dicke D sowie einen Umfang U, gemessen entlang des Randes einer Hauptfläche 3, 4. Während jede Hauptfläche 3, 4 eine Fläche $F_H$ aufweist, hat die Umfangsfläche 5, also die Gesamtheit der Flächen aller Stirnseiten 6, 7, eine Fläche $F_U$ einen Wert von $F_U = U * D$.

Im fertigen Zustand ist der Kern 2 des Wärmedämmkörpers 1 vollständig umhüllt, und zwar gasdicht, damit das Vakuum in dem umschlossenen Volumen über viele Jahre hinweg aufrecht erhalten bleibt.

Zu diesem Zweck erstreckt sich entlang einer Hauptfläche 3 - in Fig. 1 entlang der unteren - eine erste Barrierefolie 8. Diese erste Barrierefolie 8 ist flächenmäßig größer als die betreffende Hauptfläche 3 des Kerns 2, so dass sich ein Überstand 9 mit einer Breite Ü ergibt, also mit einem Flächenmaß $F_Ü = U * Ü + 4 * Ü^2$; demnach ist die Fläche $F_{B1}$ der ersten Barrierefolie 8 gegeben zu $F_{B1} = F_H + F_Ü = F_H + U * Ü + 4 * Ü^2$. Der rundumlaufende Überstand 9 hat bspw. eine Breite Ü zwischen 3 mm und 30 mm, vorzugsweise zwischen 4 mm und 20 mm, insbesondere zwischen 5 mm und 15 mm.

Bevorzugt besteht diese erste Barrierefolie 8 aus einer Aluminiumverbundfolie, an deren dem Kern 2 zugekehrten Innenseite 10 eine Siegelschicht angeordnet ist, vorzugsweise aus Polyethylen.

Entlang der gegenüber liegenden Hauptfläche 4 des Kerns 2 erstreckt sich ein flächiges Filtermaterial 11, bspw. in der Form eines Vlieses oder Gewebes, insbesondere aus Polyester, Polyethylen, Polyolefin, Glasfaser und/oder Papier. Entscheidend ist, dass es luftdurchlässig ist, jedoch die Pulverkörner des Kerns 2 vollständig zurückhalten kann. Die Fläche $F_{FM}$ dieses Filtermaterials 11 ist größer als die Fläche $F_H$ der betreffenden Kern-Hauptfläche 4, und größer als die Fläche $F_{B1}$ der ersten Barrierefolie 8; nämlich $F_{FM} = F_{B1} + \Delta F$. Entlang der Außenseite 12 des Filtermaterials 11 erstreckt sich eine zweite Barrierefolie 13, deren Fläche $F_{B2}$ etwa der Fläche $F_{FM}$ des Filtermaterials 11 entspricht: $F_{B2} = F_{FM} = F_{B1} + \Delta F$.

Bedenkt man, dass die beiden Barrierefolien 8,13 einander spätestens m peripheren Rand des Überstandes 9 treffen müssen, um den inneren Hohlraum dicht umschließen zu können, so ergibt sich für den Überstand X der zweiten Barrierefolie 13 im Falle der kürzesten, querschnittlichen Verbindung von der oberen Kante des Kerns zu dem peripheren Rand der ersten Folie 8 gemäß Pythagoras: $X^2 = D^2 + Ü^2$, also ein minimaler Überstand $X = (D^2 + Ü^2)^{1/2}$. Daraus folgt $\Delta F \geq U * [(D^2 + Ü^2)^{1/2} - Ü]$, also $\Delta F \geq U * Ü * [(D^2/Ü^2 + 1)^{1/2} - 1] = U * Ü * [W - 1]$. Die Wurzel W wird minimal bei $D/Ü \to 0$. Dort kann man W zu einer Taylorreihe entwickeln und nach dem quadratischen Glied abbrechen: $W = 1 + ½ * [D/Ü]^2 + ...$ In die Formel weiter oben eingesetzt liefert dies $\Delta F \geq ½ * U * D * D/Ü = \Delta F_{min}$, also eine Abschätzung für den bei der zweiten Folie 13 zusätzlich vorzusehenden Flächenbedarf $\Delta F_{min}$, welcher mindestens erforderlich ist, damit diese Folie 13 nicht überdehnt wird und also nicht beschädigt wird. Bei der Herstellung von evakuierten Flächengebilden mit einer angestrebten, langjährigen Lebenserwartung ist diese Patentformel zur Bestimmung von ΔF$_{min}$ von großer Bedeutung.

Die zweite Barrierefolie 13 besteht vorzugsweise aus einer metallisierten Kunststofffolie, mit einer Siegelschicht an ihrer Innenseite 14.

Wie man Fig. 2 entnehmen kann, liegt der Kern 2 im fertigen Zustand flach an der Innenseite 10 der ersten Barrierefolie 8 an, unter Einhaltung eines rundumlaufenden Überstands 9 der Barrierefolie 8 von etwa konstanter Breite Ü. Das flächige Filtermaterial 11 überdeckt den Kern 2 und den Überstand 9 der Barrierefolie 8. Darüber liegt etwa deckungsgleich mit dem Filtermaterial 11 die zweite Barrierefolie 13. Entlang des Überstands 9 erstreckt sich eine rundum laufende Siegelnaht 15, in welche das Filtermaterial 11 vorzugsweise mit eingeschweißt ist. Bevorzugt ist die gesamte Siegelnaht 15 in einem einzigen Arbeitsgang hergestellt und weist deshalb weder einen erkennbaren Anfang noch ein erkennbares Ende auf, und auch keine Überkreuzungen od. dgl.

Wie die Fig. 2 und 3 weiter erkennen lassen, ist es bei diesem Grundprinzip völlig unproblematisch, in dem Wärmedämmkörper 1 Abstufungen 16 und oder Durchbrechungen 17 vorzusehen. Diese können bspw. zuvor in den Kern 2 eingearbeitet sein und finden sich dann am fertigen Produkt wieder. Bei Durchbrechungen 17 ist eine an deren Rand entlang laufende Siegelnaht 18 vorzusehen, damit das Volumen innerhalb des Wärmedämmkörpers 1 luftdicht abgeschlossen ist. Die Fläche radial innerhalb einer solchen Siegelnaht 18 kann dann aus beiden Barrierefolien 8, 13 problemlos herausgeschnitten werden.

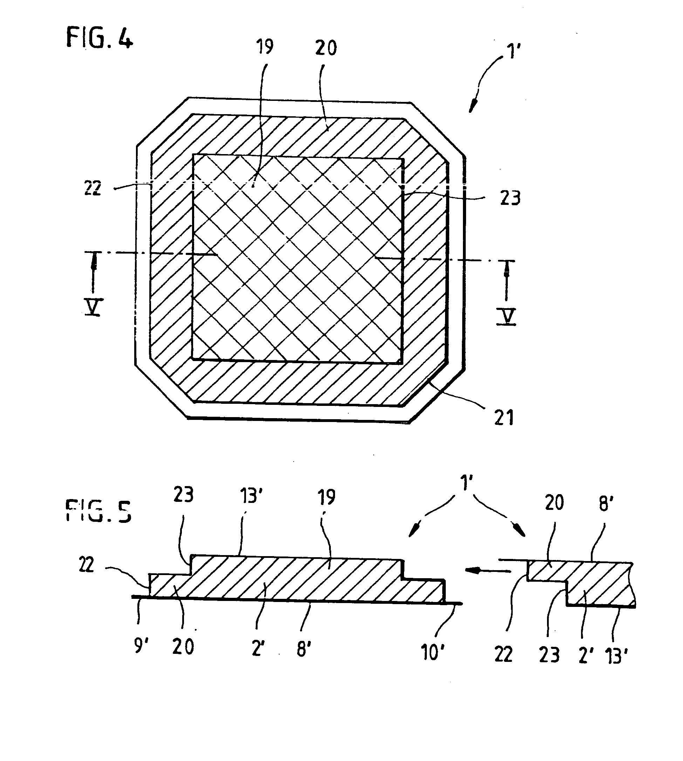

In Fig. 4 ist ein weiterer Wärmedämmkörper 1' offenbart, mit dem sich trotz des seitlichen Überstands 9' eine lückenlose Belegung einer Fläche bewirken läßt.

Zu diesem Zweck hat der Wärmedämmkörper 1' zwei unterschiedlich dicke Bereiche: In einem zentralen Bereich 19 hat der Kern 2' eine Stärke D, während an der Peripherie ein umlaufender Randbereich 20 nur eine Stärke von D/2 aufweist. Der zentrale Bereich 19 umfaßt eine rechteckige oder gar quadratische Grundfläche, während der Außenumfang des Kerns 2', also auch der Außenumfang seines randseitigen Bereichs 20, eine achteckige Gestalt aufweist, mit um etwa 45° abgeschrägten Eckbereichen 21, während die dazwischen liegenden Kanten 22 etwa die selbe Länge aufweisen wie die betreffende Kante 23 des zentralen Bereichs 19.

Dieser Kern 2' ist - wie bei der ersten Ausführungsform 1 - einseitig von einer Lage eines Filtermaterials 11 abgedeckt und von zwei gasdichten Barrierefolien 8' und 13' umhüllt.

Wie der Fig. 5 zu entnehmen ist, läßt sich an jeder Kante 22 eines solchen Wärmedämmkörpers 1' je ein weiterer, baugleicher Wärmedämmkörper 1' ansetzen, und zwar in gestürzter Anordnung. An den übrigen drei Seiten jedes dieser gestürzten Wärmedämmkörper 1' läßt sich sodann wieder je ein Wärmedämmkörper 1' in aufrechter Position ansetzen, usw. Dadurch ergibt sich eine weitgehend lückenlose Belegung einer Fläche.

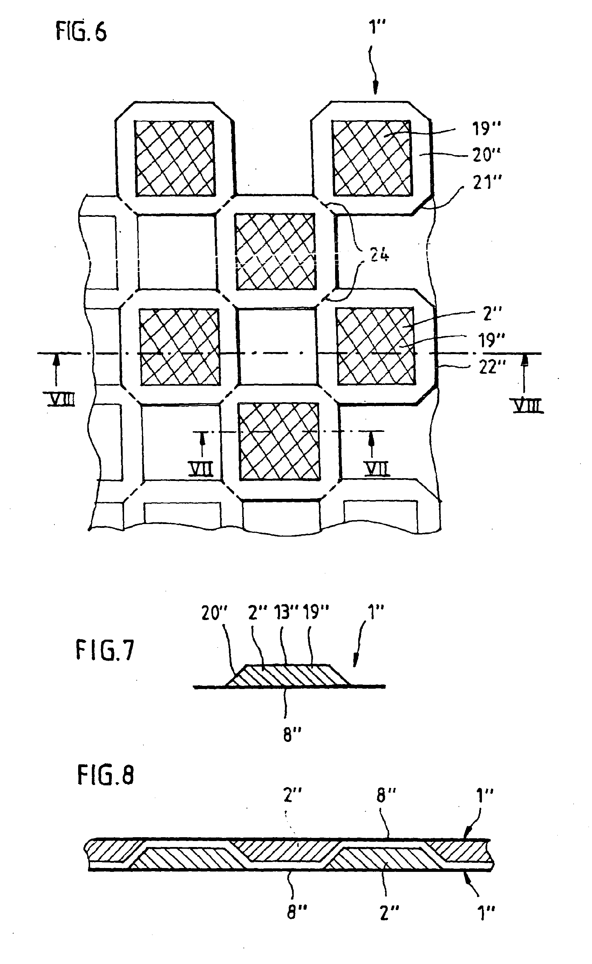

Bei der Anordnung nach Fig. 6 und 7 ist dieses Prinzip weiter verfeinert. Hier sind mehrere Kerne 2" von einem gemeinsamen Filtermaterial 11" einseitig abgedeckt und zwischen zwei Barrierefolien 8", 13" vakuumdicht eingeschweißt. Die Kerne haben jeweils eine flächige Form mit einem rechteckigen oder gar quadratischen Zentralbereich 19" und einem Randbereich 20" mit einem achteckigen Umfang und verringerter Dicke. Wie die Fig. 7 zeigt, reduziert sich die Dicke von dem zentralen Bereich bis zur Peripherie des Randbereichs 20" etwa linear, so dass ein solcher Kern 2" insgesamt also etwa die Gestalt eines Pyramidenstumpfs aufweist, wobei die Eckbereiche eines Kerns 2" abgeschnitten sind, wie durch die gestrichelten Linien 24 in Fig. 6 angedeutet. Bevorzugt sind entlang dieser Linien 24 die einzelnen Kerne 2" um ein kleines Maß voneinander beabstandet, so dass an dieser Stelle eine Siegelnaht vorgesehen sein kann. Dadurch sind die Bereiche aller Teil-Kerne 2" luftdicht voneinander abgeschlossen, und falls eine Barrierefolie 8", 13" im Bereich eines Kern 2" verletzt würde, so betrifft dies nicht die übrigen Kern-Bereiche 2".

Die Bereiche zwischen jeweils vier Kernen 2" können aus beiden Folien 8", 13" herausgeschnitten sein. Dies ist jedoch nicht zwingend. Stattdessen sieht die Erfindung auch vor, dass die Folienbereiche zwischen jeweils vier Kernen 2" nicht herausgeschnitten sind. Wie Fig. 8 zeigt, ist es bei derartigen Ausführungsformen auch möglich, zwei derartige Matten 1" mit jeweils mehreren Kernen 2" derart ineinander anzuordnen, dass jeweils ein Kernbereich 2" einer Matte 1" in die Vertiefungen zwischen jeweils vier Kernen 2" der anderen Matte 1" eingreifen. Dies ist insbesondere dadurch möglich, dass eine Matte 1" gegenüber der anderen um 180° gewendet wird, so dass deren Oberseite (also bspw. deren zweite Barrierefolienschicht 13") zuunterst und ihre Unterseite (also bspw. deren erste Barrierefolienschicht 8") zuoberst liegt. Nötigenfalls könnten einzelne Kerne 2" aus einer derartigen Matte herausgetrennt werden, insbesondere durch Ausschneiden entlang der angrenzenden Siegelnaht-Linien 24.

Im Rahmen einer anderen Anwendung kann ein Vakuumpaneel, das nach der beschriebenen erfindungsgemäßen Methode hergestellt wurde, bspw. die Form einer Schuhsohleneinlage aufweisen, mit einer Dicke von etwa 3 mm, und ggf. mit einer oder mehreren Einschnitten in der Fläche, wodurch ein beständiges leichtes Einknicken der Schuhsohle beim Gehen ermöglicht wird, ohne dass die Hüllfolien beschädigt werden.

Bezugszeichenliste

1 Wärmedämmkörper
2 Kern
3 Hauptfläche

4     Hauptfläche
5     Umfangsfläche
6     Stirnseite
7     Stirnseite
8     erste Barrierefolie
9     Überstand
10    Innenseite
11    Filtermaterial
12    Außenseite
13    zweite Barrierefolie
14    Innenseite
15    Siegelnaht
16    Abstufung
17    Durchbrechung
18    Siegelnaht
19    zentraler Bereich
20    peripherer Bereich
21    Eckbereich
22    Kante
23    Linie

**Patentansprüche**

1. Evakuiertes Flächengebilde (1;1';1") zur Wärmedämmung, umfassend

a) wenigstens einen flächigen Kern (2;2';2") aus einem offenporigen Material mit zwei zueinander etwa parallel verlaufenden Hauptflächen sowie mit einem rundum laufenden, die beiden Hauptflächen miteinander verbindenden Umfangsbereich,
b) eine erste, an einer ersten Hauptfläche des Kerns großflächig anliegende Barrierefolie (8;8';8") mit wenigstens einer, dem Kern (2;2';2") zugewandten Siegelschicht, sowie mit einem rundum laufenden Überstand der ersten Barrierefolie (8;8';8") gegenüber der ersten Hauptfläche des Kerns (2;2';2"),
c) ein an einer zweiten, der ersten Barrierefolie (8;8';8") gegenüberliegenden Hauptfläche des offenporigen Kerns (2;2';2") großflächig anliegendes, flächiges Filtermaterial (11;11';11") mit einem rundum laufenden Überstand gegenüber der zweiten Hauptfläche des Kerns (2;2';2"),
d) eine zweite, an der Außenseite (12) des flächigen Filtermaterials (11;11';11") großflächig anliegende Barrierefolie (13;13';13") mit wenigstens einer, dem flächigen Filtermaterial (11;11';11") zugewandten Siegelschicht, sowie mit einem rundum laufenden Überstand der zweiten Barrierefolie (13;13';13") gegenüber der zweiten Hauptfläche des Kerns (2;2';2"),
e) eine entlang des gemeinsamen Überstandes beider Barrierefolien (8,13;8',13';8",13") rundum laufende Siegelnaht (15;15';15"), welche die beiden Barrierefolien (8,13;8',13';8",13") aneinander festlegt,
f) wobei das Filtermaterial (11;11';11") rundum in die Siegelnaht (15;15';15") zwischen den beiden Barrierefolien (8,13;8',13';8",13") eingeschweißt ist.
g) und wobei das Volumen zwischen den beiden Barrierefolien (8,13;8',13';8",13") und der rundum laufenden Siegelnaht (15;15';15"), bestehend aus dem offenporigen Kern (2;2';2") und dem inneren Teil des Filtermaterials (11; 11';11"), vakuumdicht abgeschlossen und evakuiert ist.

2. Evakuiertes Flächengebilde (1;1';1") nach Anspruch 1, **dadurch gekennzeichnet, dass** eine Barrierefolie (8,13;8',13';8",13") eine größere Fläche aufweist als die andere Barrierefolie (8,13;8',13';8",13"), wobei vorzugsweise die zweite, großflächig an dem Filtermaterial (11;11';11") anliegende Barrierefolie (13;13';13") größer ist als die erste, großflächig an dem Kern (2;2';2") anliegende Barrierefolie (8;8';8").

3. Evakuiertes Flächengebilde (1;1';1") nach einem der vorhergehenden Ansprüche, **dadurch gekennzeichnet, dass** alle Abschnitte der rundum laufenden Schweißnaht (15) in einer gemeinsamen Ebene liegen, wobei vorzugsweise die gemeinsame Ebene etwa mit der dem Filtermaterial (11;11';11") gegenüber liegenden Hauptfläche (3,4) des Kerns (2;2';2") fluchtet.

4. Evakuiertes Flächengebilde (1;1';1") nach einem der vorhergehenden Ansprüche, **dadurch gekennzeichnet, dass** diejenige Barrierefolie (8,13;8',13'; 8",13"), deren Hauptabschnitt mit der gemeinsamen Ebene aller Abschnitte der rundum laufenden Schweißnaht (15) fluchtet, aus einer mehrschichtigen Aluminiumverbundfolie besteht, und/oder dass diejenige Barrierefolie (8,13;8',13';8",13"), deren Hauptabschnitt nicht mit der gemeinsamen Ebene aller Abschnitte der rundum laufenden Schweißnaht (15) fluchtet, aus einer metallisierten oder einer transparenten Hochbarrierefolie besteht.

5. Evakuiertes Flächengebilde (1;1';1") nach einem der vorhergehenden Ansprüche, **dadurch gekennzeichnet, dass** die rundumlaufende Siegelnaht (15) in einem einzigen Arbeitsgang hergestellt ist.

6. Evakuiertes Flächengebilde (1;1';1") nach einem der vorhergehenden Ansprüche, **dadurch gekennzeichnet, dass** die rundumlaufende Siegelnaht (15) keine Überkreuzungen aufweist und/oder weder einen erkennbaren Anfang noch ein erkennbares Ende aufweist.

7. Evakuiertes Flächengebilde (1;1';1") nach einem der vorhergehenden Ansprüche, **dadurch gekenn-**

**zeichnet, dass** das Filtermaterial (11;11';11") aus dem selben Werkstoff besteht wie eine Siegelschicht einer Barrierefolie (8,13;8',13';8",13").

8. Evakuiertes Flächengebilde (1;1';1") nach einem der vorhergehenden Ansprüche, **gekennzeichnet durch** eine oder mehrere Durchbrechung(en) (17) bzw. Ausschnitte und/oder Einschnitte in wenigstens einer Barrierefolie (8,13;8',13';8",13), oder **durch** eine oder mehrere Durchbrechung(en) (17) bzw. Ausschnitte und/oder Einschnitte in jeweils beiden Barrierefolien (8,13;8',13';8",13), welche etwa miteinander fluchten oder einander überdecken, wobei vorzugsweise entlang einer oder mehrerer Durchbrechung(en) (17) bzw. Ausschnitte und/oder Einschnitte eine oder mehrere Siegelnähte verlaufen, welche jeweils beide Barrierefolien (8,13;8',13'; 8",13") miteinander verbinden, und/oder wobei vorzugsweise mehrere Durchbrechung(en) (17) bzw. Ausschnitte und/oder Einschnitte in einem regelmäßigen Raster liegen, insbesondere in einem schachbrettartigen Raster, entsprechend gleichfarbiger Felder eines Schachbretts, wobei vorzugsweise mehrere Durchbrechung(en) (17) bzw. Ausschnitte und/oder Einschnitte etwa gleiche Flächen aufweisen.

9. Evakuiertes Flächengebilde (1;1';1") nach einem der vorhergehenden Ansprüche, **dadurch gekennzeichnet, dass** zwischen den beiden Barrierefolien (8,13;8',13';8",13) innerhalb einer gemeinsamen Ebene mehrere Kerne (2;2';2") vorhanden sind, welche voneinander vollständig getrennt sind, insbesondere durch Siegelnähte, wobei vorzugsweise mehrere Kerne (2;2';2"), in einem regelmäßigen Raster liegen, insbesondere in einem schachbrettartigen Raster, entsprechend gleichfarbiger Felder eines Schachbretts, wobei vorzugsweise mehrere Kerne (2;2';2") etwa gleiche Grundflächen aufweisen.

10. Evakuiertes Flächengebilde (1;1';1") nach einem der vorhergehenden Ansprüche, **gekennzeichnet durch**

    a) mit einem rasterartigen Kernaufbau, wobei mehrere Kerne (2;2';2") oder Kernerhebungen in einem schachbrettartigen Raster liegen, entsprechend gleichfarbiger Felder eines Schachbretts, und **durch** mehrere Durchbrechungen (17) bzw. Ausschnitte und/oder Einschnitte oder Kernvertiefungen voneinander getrennt sind,
    b) wobei die Kerne (2;2';2") oder Kernerhebungen und Durchbrechungen (17) bzw. Ausschnitte und/oder Einschnitte oder Kernvertiefungen derart gestaltet sind, dass ein derartiges Flächengebilde in die Durchbrechungen (17) bzw. Ausschnitte und/oder Einschnitte oder Vertiefungen eines baugleichen Flächengebildes, welches gestürzt ist, so dass seine Oberseite nach unten weist, eingreifen kann,
    c) wobei die Gesamtanordnung keine oder kaum Lücken aufweist.

11. Evakuiertes Flächengebilde (1;1';1") nach einem der vorhergehenden Ansprüche, **gekennzeichnet durch** eine oder mehrere eingeprägte Stufe(n), wobei die daran angrenzenden Flächenbereiche (16;19,20;19",20") unterschiedlich dick sind, und/oder **durch** eine oder mehrere linienförmige oder streifenförmige Einprägungen, so dass das evakuierte Flächengebilde (1;1';1") an diesen Einprägungen um mindestens 5° knickbar ist.

12. Evakuiertes Flächengebilde (1;1';1") nach einem oder mehreren der vorhergehenden Ansprüche, **gekennzeichnet durch** eine oder mehrere linienförmige oder streifenförmige Einprägung(en), entlang welcher die beiden Barrierefolien (8;13;8';13';8",13) miteinander versiegelt sind, insbesondere ohne Einschluss von Pulverteilchen, wobei vorzugsweise die Einprägungen das Flächengebilde (1;1';1") von einem randseitigen Schweißnahtabschnitt (15) bis zu einem anderen vollständig durchqueren und damit einzelne Bereiche des Flächengebildes (1;1';1") vakuumdicht gegeneinander abschließen.

13. Evakuiertes Flächengebilde (1;1';1") nach einem oder mehreren der vorhergehenden Ansprüche, **gekennzeichnet durch** wenigstens einen, zwischen den Barrierefolien (8,13;8',13';8",13) angeordneten, insbesondere in einer Vertiefung des Kerns (2;2';2") eingelegten Probekörper, dessen Wärmeleitfähigkeit vom Gasdruck abhängt, oder Sensor zur Messung des (Unter-) Drucks in dem evakuierten Flächengebilde (1;1';1") von außen.

14. Evakuiertes Flächengebilde (1;1';1") nach einem oder mehreren der vorhergehenden Ansprüche, **dadurch gekennzeichnet, dass** eine Ausbuchtung in der Folienfläche nur die beiden Barrierefolien (8,13;8',13';8",13) sowie das Filtermaterial (11; 11';11") aufweist, so dass an dieser Stelle über den von außen gemessenen Wärmedurchgang durch das Filtermaterial (11;11';11") der Gasdruck im Kern (2;2';2") bestimmt werden kann.

15. Verfahren zur Herstellung eines evakuierten Flächendämmkörpers (1;1';1") nach einem der vorhergehenden Ansprüche, **dadurch gekennzeichnet, dass**

    - auf eine erste Barrierefolie (8;8';8") loses Pulver oder ein verfestigter Pulverkern (2;2';2") aufgebracht wird, derart, dass die Barrierefolie (8;8';8") einen rundum laufenden Überstand gegenüber einer ersten, angrenzenden Hauptfläche des Kerns (2;2';2") oder Kernmaterials aufweist;

- darüber ein flächiges Filtermaterial (11;11';11") zu liegen kommt, derart, dass dieses einen rundum laufenden Überstand gegenüber einer zweiten, an das Filtermaterial (11;11';11") angrenzenden Hauptfläche des Kerns (2;2';2") oder Kernmaterials aufweist;

- das flächige Filtermaterial (11;11';11") im Bereich seines Überstandes mit dem Überstand der ersten Barrierefolie (8;8';8") so verbunden wird, dass das Kern- oder Pulvervolumen abgeschlossen ist,

- der Kern (2;2';2") oder dessen Kernmaterial in einer Vakuumkammer auf einen Druck von < 10 mbar evakuiert wird,

- eine zweite Barrierefolie (13;13';13") außen auf das Filtermaterial (11;11';11") appliziert wird, derart, dass diese über die zweite Hauptfläche des Kerns (2;2';2") oder Kernmaterials einen rundum laufenden Überstand aufweist, der mit dem Überstand des Filtermaterials (11;11';11") und/oder mit dem Überstand der ersten Barrierefolie (8;8';8") im Vakuum so verbunden wird, dass das innere Volumen bestehend aus Pulverkern (2;2';2") und Filterflächenmaterial (11;11';11") vakuumdicht abgeschlossen ist,

- und das Flächengebilde (1;1';1") der Vakuumkammer nach dem Belüften entnommen wird.

**Claims**

1. An evacuated sheet material (1;1';1") for thermal insulation, comprising

   a) at least one flat core (2;2';2") made of an open-pored material and having two main surfaces extending approximately parallel to each other and a fully circumferential perimeter region connecting the two main surfaces to each other,
   b) a first barrier film (8;8';8") that is in large-area contact with a first main surface of the core and comprises at least one sealing layer facing the core (2;2';2"), as well as a fully circumferential protrusion of said first barrier film (8;8';8") with respect to the first main surface of the core (2;2';2"),
   c) a flat filter material (11;11';11") that is in large-area contact with the opposite main surface of the open-pored core (2;2';2") from the first barrier film (8;8';8") and presents a fully circumferential protrusion with respect to the second main surface of the core (2;2';2"),
   d) a second barrier film (13;13';13") that is in large-area contact with the outer face (12) of the flat filter material (11;11';11") and comprises a sealing layer facing said flat filter material (11;11';11"), as well as a fully circumferential protrusion of said second barrier film (13;13';13") with respect to the second main surface of the core (2;2';2"),
   e) a sealing seam (15;15';15") that extends fully circumferentially along the common protrusion of the two barrier films (8,13;8',13';8",13") and fixes the two barrier films (8,13;8',13';8",13") to each other,
   f) wherein said filter material (11;11';11") is welded fully circumferentially into the sealing seam (15;15';15") between the two barrier films (8,13;8',13',8",13"),
   g) and wherein the volume between the two barrier films (8,13;8',13',8",13") and the fully circumferential sealing seam (15;15';15"), consisting of the open-pored core (2;2';2") and the inner portion of the filter material (11;11';11"), is sealed vacuum-tightly and evacuated.

2. The evacuated sheet material (1;1';1") as in claim 1, **characterized in that** one barrier film (8,13;8',13';8",13") has a greater area than the other barrier film (8,13;8',13';8",13"), whereby preferably the second barrier film (13;13'; 13"), which is in large-area contact with the filter material (11;11';11"), is larger than the first barrier film (8;8';8"), which is in large-contact with the core (2;2';2").

3. The evacuated sheet material (1;1';1") as in one of the preceding claims, **characterized in that** all portions of the fully circumferential weld seam (15) lie in a common plane, said common plane preferably being approximately flush with the opposite main surface (3,4) of the core (2;2';2") from the filter material (11;11';11").

4. The evacuated sheet material (1;1';1") as in one of the preceding claims, **characterized in that** the barrier film (8,13;8',13';8",13") whose main portion is flush with the common plane of all portions of the fully circumferential weld seam (15) consists of multilayer aluminum composite film, and/or that the barrier film (8,13;8',13';8",13") whose main portion is not flush with the common plane of all portions of the fully circumferential weld seam (15) consists of a metallized or transparent high-barrier film.

5. The evacuated sheet material (1;1';1") as in one of the preceding claims, **characterized in that** the fully circumferential sealing seam (15) is produced in a single operation.

6. The evacuated sheet material (1;1';1") as in one of the preceding claims, **characterized in that** the fully circumferential sealing seam (15) has no intersections and/or neither a discernible beginning nor a discernible end.

7.  The evacuated sheet material (1;1';1") as in one of the preceding claims, **characterized in that** the filter material (11;11';11") consists of the same material as a sealing layer of a barrier film (8,13;8',13';8",13").

8.  The evacuated sheet material (1;1';1") as in one of the preceding claims, **characterized by** one or more through hole(s) (17) or cut-outs and/or scores in at least one barrier film (8,13;8',13';8",13"), or by one or more through hole(s) (17) or cut-outs and/or scores in each of the two barrier films (8,13; 8',13';8",13") that are approximately aligned with or overlie one another, wherein preferably one or more sealing seams, each of which connects the two barrier films (8,13;8',13';8",13") to each other, extend along one or more through hole(s) (17) or cut-outs and/or scores, and/or wherein preferably a plurality of through hole(s) (17) or cut-outs and/or scores are disposed in a regular grid, particularly in a checkerboard-like grid, analogously to squares of the same color on a checkerboard, wherein preferably a plurality of through hole(s) (17) or cut-outs and/or scores preferably have approximately the same area.

9.  The evacuated sheet material (1;1';1") as in one of the preceding claims, **characterized in that** a plurality of cores (2;2';2") that are completely separated from one another, particularly by sealing seams, are present in a common plane between the two barrier films (8,13;8',13';8",13"), wherein preferably a plurality of cores (2;2';2") are disposed in a regular grid, particularly in a checkerboard-like grid, analogously to squares of the same color on a checkerboard, wherein a plurality of cores (2;2';2") preferably have approximately the same base area.

10. The evacuated sheet material (1;1';1") as in one of the preceding claims, **characterized by**

    a) a grid-like core structure, wherein a plurality of cores (2;2';2") or elevated portions thereof lie in a checkerboard-like grid, analogously to squares of the same color on a checkerboard, and are separated from one another by a plurality of through holes (17) or cut-outs and/or scores or core depressions,
    b) wherein the cores (2;2';2") or elevated portions thereof and through holes (17) or cut-outs and/or scores or core depressions are configured in such a way that a sheet material of this kind is able to engage in the through holes (17) or cut-outs and/or scores or depressions of a sheet material of the same design that is turned upside down so that its top side faces downward,
    c) wherein there are no or hardly any gaps in the arrangement as a whole.

11. The evacuated sheet material (1;1';1") as in one of the preceding claims, **characterized by** one or more embossed step(s), whereby the surface regions (16;19,20;19",20") adjacent thereto being of different thickness, und/or by one or more linear or ribbon-shaped embossings, such that the evacuated sheet material (1;1';1") can be flexed at least 5° at said embossings.

12. The evacuated sheet material (1;1';1") as in one or more of the preceding claims, **characterized by** one or more linear or ribbon-shaped embossing(s) along which the two barrier films (8,13;8',13';8",13") are sealed to each other, particularly without the inclusion of powder particles, wherein preferably said embossings extend all the way across the sheet material (1;1';1") from one edgewise welding seam portion (15) to another and thereby seal individual regions of the sheet material (1;1';1") off from one another vacuum-tightly.

13. The evacuated sheet material (1;1';1") as in one or more of the preceding claims, **characterized by** at least one test body that is disposed between the barrier films (8,13;8',13';8",13"), particularly inserted in a depression of the core (2;2';2"), and whose thermal conductivity depends on the gas pressure, or a sensor for measuring the (negative) pressure in the evacuated sheet material (1;1';1") from the outside.

14. The evacuated sheet material (1;1';1") as in one or more of the preceding claims, **characterized in that** a bulge in the film sheet comprises only the two barrier films (8,13;8',13';8",13") and the filter material (11;11';11"), and the gas pressure in the core (2;2';2") can thus be determined at that location on the basis of the heat transfer through the filter material (11 ;11 ';11"), measured from the outside.

15. A method for producing an evacuated flat insulation element (1;1';1") according to one of the preceding claims, **characterized in that**

    - loose powder or a solidified powder core (2;2';2") is disposed on a first barrier film (8;8';8") in such a way that said barrier film (8;8';8") presents a fully circumferential protrusion with respect to a first, adjacent main surface of the core (2;2';2") or core material;
    - a flat filter material (11 ;11';11") is laid thereover in such a way that it presents a fully circumferential protrusion with respect to a second main surface, adjacent the filter material (11;11';11"), of the core (2;2';2") or core material;
    - the flat filter material (11;11';11") is connected in the region of its protrusion to the protrusion of the first barrier film (8;8';8") in such a way that the core volume or powder volume is sealed;
- the core (2;2';2") or its core material is evacuated in a vacuum chamber to a pressure of < 10 mbar,
- a second barrier film (13;13';13") is applied externally to the filter material (11;11';11"), in such a way that it presents a fully circumferential protrusion, which protrudes beyond the second main surface of the core (2;2';2") or core material and is connected under vacuum to the protrusion of the filter material (11;11';11") and/or to the protrusion of the first barrier film (8;8';8"), such that the inner volume, consisting of the powder core (2;2';2") and the filter sheet material (11;11';11"), is sealed vacuum-tightly;
- and the sheet material (1;1';1") is removed from the vacuum chamber after aeration.

## Revendications

1. Structure plane sous vide (1 ; 1' ; 1") pour l'isolation thermique, comprenant

    a) au moins une partie centrale plane (2 ; 2' ; 2") réalisée en un matériau à pores ouverts comportant deux surfaces principales s'étendant approximativement parallèlement l'une par rapport à l'autre ainsi qu'une zone périphérique s'étendant tout autour et reliant les deux surfaces principales entre elles,
    b) une première feuille barrière (8 ; 8' ; 8") adjacente sur une grande surface à une première surface principale de la partie centrale et comprenant au moins une couche de scellement orientée vers la partie centrale (2 ; 2' ; 2"), ladite première feuille barrière (8 ; 8' ; 8") comprenant également une partie saillante s'étendant tout autour par rapport à la première surface principale de la partie centrale (2 ; 2' ; 2"),
    c) un matériau filtrant (11 ; 11', 11 ") plan, adjacent sur une grande surface à une seconde surface principale, opposée à la première feuille barrière (8 ; 8' ; 8"), de la partie centrale à pores ouverts (2 ; 2' ; 2"), et qui comprend une partie s'étendant tout autour et faisant saillie par rapport à la seconde surface principale de la partie centrale (2 ; 2' ; 2"),
    d) une seconde feuille barrière (13 ; 13' ; 13") adjacente sur une grande surface à la face extérieure (12) du matériau filtrant (11 ; 11' ; 11 ") plan et comprenant au moins une couche de scellement orientée vers le matériau filtrant plan (11 ; 11' ; 11 "), ladite seconde feuille barrière (13 ; 13' ; 13") comprenant également une partie s'étendant tout autour et faisant saillie par rapport à la seconde surface principale de la partie centrale (2 ; 2' ; 2"),

    e) un joint de scellement (15 ; 15' ; 15") s'étendant tout autour le long de la partie saillante commune des deux feuilles barrière (8, 13 ; 8', 13' ; 8", 13") et qui fixe les deux feuilles barrière (8, 13 ; 8', 13' ; 8", 13") l'une à l'autre,
    f) le matériau filtrant (11 ; 11' ; 11 ") étant soudé tout autour dans le joint de scellement (15 ; 15' ; 15") entre les deux feuilles barrière (8, 13 ; 8', 13' ; 8", 13"),
    g) et le volume entre les deux feuilles barrière (8, 13 ; 8', 13' ; 8", 13") et le joint de scellement (15 ; 15' ; 15") s'étendant tout autour, constitué de la partie centrale (2 ; 2' ; 2") à pores ouverts et de la partie intérieure du matériau filtrant (11 ; 11' ; 11 "), étant fermé de manière étanche au vide et vidé de son air.

2. Structure plane sous vide (1 ; 1' ; 1") selon la revendication 1, **caractérisée en ce qu'** une feuille barrière (8, 13 ; 8', 13' ; 8", 13") présente une plus grande surface que l'autre feuille barrière (8, 13 ; 8', 13' ; 8", 13"), la seconde feuille barrière (13 ; 13' ; 13") adjacente sur une grande surface au matériau filtrant (11 ; 11' ; 11") étant de préférence plus grande que la première feuille barrière (8 ; 8' ; 8") adjacente sur une grande surface à la partie centrale (2 ; 2' ; 2").

3. Structure plane sous vide (1 ; 1' ; 1") selon l'une des revendications précédentes, **caractérisée en ce que** tous les segments du joint soudé (15) s'étendant tout autour se trouvent dans un plan commun, le plan commun étant de préférence approximativement en alignement avec la surface principale (3, 4), opposée au matériau filtrant (11 ; 11' ; 11 "), de la partie centrale (2 ; 2' ; 2").

4. Structure plane sous vide (1 ; 1' ; 1") selon l'une des revendications précédentes, **caractérisée en ce que** la feuille barrière (8, 13 ; 8', 13' ; 8", 13") dont le segment principal est en alignement avec le plan commun de tous les segments du joint soudé (15) s'étendant tout autour, est constituée d'une feuille composite d'aluminium multi-couche, et/ou ladite feuille barrière (8, 13 ; 8', 13' ; 8", 13") dont le segment principal n'est pas en alignement avec le plan commun de tous les segments du joint soudé (15) s'étendant tout autour, est constituée d'une feuille haute barrière métallisée ou transparente.

5. Structure plane sous vide (1 ; 1' ; 1") selon l'une des revendications précédentes, **caractérisée en ce que** le joint de scellement (15) s'étendant tout autour est réalisé en une seule et unique opération.

6. Structure plane sous vide (1 ; 1' ; 1") selon l'une des revendications précédentes, **caractérisée en ce que** le joint de scellement (15) s'étendant tout autour ne présente pas d'intersection et/ou ne présente ni un début apparent ni une fin apparente.

7. Structure plane sous vide (1 ; 1' ; 1") selon l'une des revendications précédentes, **caractérisée en ce que** le matériau filtrant (11 ; 11' ; 11 ") se compose du même matériau qu'une couche de scellement d'une feuille barrière (8, 13 ; 8', 13' ; 8", 13").

8. Structure plane sous vide (1 ; 1' ; 1") selon l'une des revendications précédentes, **caractérisée par** une ou plusieurs ouvertures (17) ou bien des découpes et/ou des entailles dans au moins un feuille barrière (8, 13 ; 8', 13' ; 8", 13"), ou par une ou plusieurs ouvertures (17) ou bien des découpes et/ou des entailles respectivement dans les deux feuilles barrières (8, 13 ; 8', 13' ; 8", 13"), qui sont approximativement en alignement entre elles ou se chevauchent, un ou plusieurs joints de scellement s'étendant de préférence le long d'une ou de plusieurs ouvertures (17) ou bien des découpes et/ou des entailles, lesdits joints de scellement reliant respectivement les deux feuilles barrière (8, 13 ; 8', 13' ; 8", 13"), et/ou de préférence plusieurs ouvertures (17) ou bien découpes et/ou entailles se trouvent dans une trame régulière, en particulier dans une trame en forme de damier, correspondant aux cases de même couleur d'un damier, plusieurs ouvertures (17) ou bien découpes et/ou entailles présentant de préférence des surfaces approximativement égales.

9. Structure plane sous vide (1 ; 1' ; 1") selon l'une des revendications précédentes, **caractérisée en ce qu'**il existe plusieurs parties centrales (2 ; 2' ; 2") entre les deux feuilles barrière (8, 13 ; 8', 13' ; 8", 13") à l'intérieur d'un plan commun, lesdites parties centrales étant complètement séparées l'une de l'autre, en particulier par des joints de scellement, plusieurs parties centrales (2 ; 2' ; 2") étant de préférence dans une trame régulière, en particulier dans une trame en forme de damier, correspondant aux cases de même couleur d'un damier, plusieurs parties centrales (2 ; 2' ; 2") présentant de préférence des surfaces approximativement égales.

10. Structure plane sous vide (1 ; 1' ; 1") selon l'une des revendications précédentes, **caractérisée par**

    a) une structure de partie centrale en forme de trame, plusieurs parties centrales (2 ; 2' ; 2") ou protubérances de partie centrale se trouvant dans une trame en forme de damier, correspondant aux cases de même couleur d'un damier, et étant séparées les unes des autres par plusieurs ouvertures (17) ou bien découpes et/ou entailles ou cavités de partie centrale,
    b) les parties centrales (2 ; 2' ; 2") ou protubérances de partie centrale et ouvertures (17) ou bien découpes et/ou entailles ou cavités de partie centrale sont formées de manière à ce qu'une structure plane de ce type puisse s'engager dans les ouvertures(17) ou bien découpes et/ou entailles ou cavités d'une structure plane de même forme, laquelle est renversée pour que sa face supérieure soit dirigée vers le bas,
    c) l'ensemble de la disposition ne présentant pas ou pratiquement pas d'intervalle.

11. Structure plane sous vide (1 ; 1' ; 1") selon l'une des revendications précédentes, **caractérisée par** un ou plusieurs niveaux estampés, les zones de surfaces (16 ; 19, 20 ; 19", 20") qui y sont adjacentes étant d'épaisseur différente, et/ou par une ou plusieurs empreintes linéaires ou en forme de bande, de sorte que la structure plane sous vide (1 ; 1' ; 1") puisse être pliée de 5° au minimum au niveau de ces empreintes.

12. Structure plane sous vide (1 ; 1' ; 1") selon l'une ou plusieurs des revendications précédentes, **caractérisée par** une ou plusieurs empreintes linéaires ou en forme de bande, le long desquelles les deux feuilles barrière (8, 13 ; 8', 13' ; 8", 13") sont scellées l'une à l'autre, en particulier sans inclusion de particule de poudre, les empreintes traversant de préférence entièrement la structure plane (1 ; 1' ; 1") d'un segment de joint soudé (15) au niveau du bord jusqu'à l'autre et obturant ainsi de manière étanche au vide les différentes zones de la structure plane (1 ; 1' ; 1 ").

13. Structure plane sous vide (1 ; 1' ; 1") selon l'une ou plusieurs des revendications précédentes, **caractérisée par** au moins une éprouvette disposée entre les feuilles barrière (8, 13 ; 8', 13' ; 8", 13"), en particulier introduite dans une cavité de la partie centrale (2 ; 2' ; 2"), la conductivité thermique de ladite éprouvette étant en fonction de la pression de gaz, ou un capteur pour la mesure de la (dé) pression dans la structure plane sous vide (1 ; 1' ; 1") de l'extérieur.

14. Structure plane sous vide (1 ; 1' ; 1") selon l'une ou plusieurs des revendications précédentes, **caractérisée en ce qu'**une indentation ne présente dans la surface de feuille que les deux feuilles barrière (8, 13 ; 8', 13' ; 8", 13") ainsi que le matériau filtrant (11 ; 11' ; 11 "), de façon à pouvoir déterminer à ce point la pression de gaz dans la partie centrale (2 ; 2' ; 2") par le biais de la transmission thermique mesurée de l'extérieur par le matériau filtrant (11 ; 11' ; 11 ").

15. Procédé pour la fabrication d'un corps d'isolation plan sous vide (1 ; 1' ; 1") selon l'une des revendications précédentes, **caractérisé en ce que**

    - de la poudre en vrac ou une partie centrale pulvérulente durcie (2 ; 2' ; 2") est appliquée sur une première feuille barrière (8 ; 8' ; 8") de façon telle que la feuille barrière (8 ; 8' ; 8") présente une partie saillante s'étendant tout autour par rapport à une première surface principale adjacente de la partie centrale (2 ; 2' ; 2") ou du matériau de la partie centrale ;

- un matériau filtrant (11 ; 11' ; 11 ") plan y est appliqué de façon telle que ce dernier présente une partie saillante s'étendant tout autour par rapport à une seconde surface principale de la partie centrale (2 ; 2' ; 2") ou du matériau de la partie centrale, adjacente au matériau filtrant (11 ; 11' ; 11 ") ;

- le matériau filtrant (11 ; 11' ; 11 ") plan est relié dans la zone de sa partie saillante à la partie saillante de la première feuille barrière (8 ; 8' ; 8") de façon telle que le volume de partie centrale ou de poudre soit fermé,

- la partie centrale (2 ; 2' ; 2") ou le matériau de sa partie centrale est mis à vide dans une chambre à vide à une pression < 10 mbar,

- une seconde feuille barrière (13 ; 13' ; 13") est appliquée de l'extérieur sur le matériau filtrant (11 ; 11' ; 11 ") de façon telle que cette seconde feuille barrière présente une partie saillante s'étendant tout autour au-dessus de la seconde surface principale de la partie centrale (2 ; 2' ; 2") ou du matériau de la partie centrale, ladite partie saillante est reliée à la partie saillante du matériau filtrant (11 ; 11' ; 11 ") et/ou à la partie saillante de la première feuille barrière (8 ; 8' ; 8") dans le vide de façon telle que le volume intérieur constitué de partie centrale pulvérulente (2 ; 2' ; 2") et de matériau filtrant plan (11 ; 11' ; 11 ") soit fermé de manière étanche au vide, et la structure plane (1 ; 1' ; 1 ") est prélevée de la chambre à vide après aération.

FIG.1

FIG.2

FIG.3

EP 2 564 108 B1

FIG. 4

19    20                    1'

22                          23

                            21

FIG. 5    23   13'   19        1'      20   8'
22

9'  20   2'  8'        10'    22  23  2' 13'

18

FIG.6

1"

19"
20"
21"
24
2"
19"
22"

VIII                    VIII

VII        VII

FIG.7

20"  2" 13" 19"    1"

8"

FIG.8

2"        8"        1"

8"    2"    1"

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058566
- DE 102005045726
- US 5500305 A
- WO 2007033836 A1